# FASCICULE DE BREVET EUROPEEN

(11) **EP 0 683 498 B1**
(45) Date de publication et mention de la délivrance du brevet: **10.12.1997**
(21) Numéro de dépôt: 95401075.7
(22) Date de dépôt: 10.05.1995
(51) Int. Cl.: H01H 9/02, H01R 4/36, H01R 4/38

(54) **Appareil électrique modulaire à bornes de raccordement protégées par une plaquette isolante**
Modulares elektrisches Gerät mit Anschlussklemmen geschützt durch eine isolierende Platte
Modular electrical apparatus with connecting terminals protected by an insulating plate

(30) Priorité: 18.05.1994 FR 9406070
(43) Date de publication de la demande: 22.11.1995
(73) Titulaire: LEGRAND, F-87045 Limoges Cédex (FR); LEGRAND SNC, F-87045 Limoges (FR)
(72) Inventeur: Beaujoin, Jacques, F-06200 Nice (FR); Cottone, Guy, F-06370 Mouans-Sartoux (FR)
(74) Mandataire: CABINET BONNET-THIRION

(56) Documents cités:
- DE-U- 8 312 142
- FR-A- 2 580 860
- FR-A- 2 602 948
- FR-A- 2 612 340
- US-A- 3 539 977

## Description

La présente invention concerne un appareil électrique modulaire selon le préambule de la revendication 1 (voir par example FR-A-2 602 948), destiné à être intégré dans une installation électrique. Les appareils modulaires visés par la présente invention sont notamment ceux destinés à commander et/ou protéger une installation électrique, tels que interrupteurs, disjoncteurs et similaires.

Dans ce type d'appareils modulaires, une borne de raccordement comprend généralement un élément conducteur fixe et un élément mobile suivant la hauteur du boîtier, par exemple un étrier traversé par ledit élément fixe, des parties actives desdits éléments fixe et mobile formant les mors d'une mâchoire adaptée à enserrer, sous la commande d'une vis de serrage, l'âme d'un câble électrique.

Non seulement l'élément conducteur mais plus généralement la borne toute entière, l'élément mobile et la vis étant le plus souvent réalisés en matériaux métalliques, doivent être protégés de manière à ce qu'un installateur ou un utilisateur ne puisse entrer en contact, accidentellement ou intentionnellement avec ladite borne, une fois le câble électrique raccordé.

Une borne de raccordement se trouve généralement à l'intérieur d'un boîtier isolant renfermant l'appareil électrique, en regard d'une ouverture à travers laquelle peut être introduit le câble électrique destiné à être raccordé à ladite borne.

La taille de cette ouverture est supérieure à celle du câble électrique, car elle doit permettre l'insertion aisée d'un câble électrique par un installateur, même si ledit câble est de diamètre important.

Il est donc possible que, à travers cette ouverture, un installateur ou un utilisateur entre en contact avec la borne alors que le câble électrique correspondant est déjà raccordé. La présente invention a notamment pour but de protéger la borne de manière à ce qu'un tel accident ne puisse se produire.

Il a été proposé d'appliquer sur les ouvertures d'introduction des câbles, des bouchons ou caches amovibles en matériau isolant. Cependant, de tels bouchons ou caches ne procurent pas une protection suffisamment sûre, ceux-ci pouvant facilement être enlevés par un utilisateur ou un installateur.

Plus intéressante est l'installation, sur l'élément mobile de la borne, d'une plaquette isolante s'étendant contre la paroi du boîtier sur laquelle est ménagée l'ouverture d'introduction du câble, ladite plaquette partant de la partie active formant mors de cet élément mobile et s'étendant à l'opposé du mors fixe, de telle façon que, lorsque la mâchoire formée par lesdits mors fixe et mobile enserre le câble, ladite plaquette s'étende en regard de la partie de l'ouverture laissée libre par le câble, et que, lorsque ladite mâchoire est ouverte, ladite plaquette laisse libre ladite ouverture.

Ainsi, lorsque la mâchoire est ouverte, le câble peut être facilement introduit dans l'ouverture qui a sa taille maximum. En revanche, lorsque la mâchoire enserre le câble, la hauteur de l'ouverture, limitée par la présence de la plaquette, correspond exactement au diamètre dudit câble, de sorte qu'il n'est pas possible qu'un utilisateur ou un installateur entre en contact avec la borne.

Avantageusement, pour les bornes dont le mors mobile se trouve en dessous du mors fixe, la plaquette est disposée de manière à ce que son extrémité supérieure se trouve à la hauteur dudit mors mobile et ledit mors fixe est installé à la hauteur de la partie supérieure de l'ouverture d'introduction du câble.

En conséquence, la portion de l'ouverture que laisse libre la plaquette correspond à l'espace entre les mors.

Cette disposition permet d'assurer que le câble à raccorder est bien introduit dans la mâchoire de la borne et non en dessus ou en dessous de cette dernière.

Il est d'ailleurs connu des bornes dont la partie mobile comporte une extension en forme de plaquette dont le rôle est d'assurer que le câble est introduit entre les mors de la mâchoire de la borne, de la manière ci-dessus exposée. Cependant, cette plaquette étant métallique, elle ne joue aucun rôle dans la protection électrique de la borne.

Dans le cadre de la présente invention, se pose le problème de la fixation de la plaquette, en matériau isolant, sur l'élément mobile de la borne qui est métallique.

Une solution avantageuse est de suspendre cette plaquette à l'élément mobile de la borne par des bras dont les extrémités forment crochets en prise avec des logements correspondants dudit élément mobile. Ce moyen d'accrochage est fiable lorsque la borne et la plaquette sont installées dans le boîtier de l'appareil, le débattement de ladite plaquette se trouvant limité par la paroi du boîtier contre laquelle cette plaquette s'étend.

En revanche, lorsque la borne est en dehors du boîtier, lesdits crochets risquent à tous moments de sortir de leurs logements respectifs, la plaquette se détachant alors de la borne.

Dans certains boîtiers, la borne et la plaquette peuvent être installées l'une après l'autre. C'est le cas notamment des boîtiers, notamment de disjoncteurs, formés de deux demi-coquilles assemblables en un plan de jonction parallèle aux grands côtés latéraux du boîtier. Dans de tels boîtiers, la borne est installée couchée dans un demi-logement ménagé sur l'une des demi-coquilles puis recouverte par un demi-logement complémentaire ménagé sur l'autre demi-coquille. L'ouverture d'introduction du câble est en général constituée de deux échancrures complémentaires ménagées sur l'une et l'autre demi-coquilles. Lorsque la borne est installée sur l'une des demi-coquilles, elle reste accessible sur toute sa hauteur. Il est donc facile d'installer les crochets de la plaquette de protection dans leurs logements sur l'élément mobile de la borne.

D'autres boîtiers, par exemple ceux pour interrupteurs différentiels, comprennent un socle, ouvert vers le haut, dans lequel les éléments de l'appareil sont introduits, un couvercle ou capot venant recouvrir ledit socle. Dans ce type de boîtier, comme il est bien connu, le logement d'une borne est constitué par deux logements complémentaires ménagés respectivement sur le socle et sur le capot du boîtier, la séparation en deux du logement de borne se faisant donc, ici, perpendiculairement à la hauteur du boîtier. Généralement, le logement ménagé dans le socle est de taille supérieure à celui ménagé sur le capot, l'ouverture d'introduction de câble électrique étant entièrement ménagée sur ledit socle. Dans certains boîtiers, le capot vient simplement refermer le logement de la borne, celle-ci étant entièrement contenue dans le socle. Quoi qu'il en soit, dans ce type de boîtiers, la borne doit être installée debout dans le logement du socle et, par conséquent, toute une partie basse de cette borne devient inaccessible. Notamment, la zone de débattement de la mâchoire de la borne se trouve emprisonnée dans ce logement du socle. De ce fait, il est compliqué d'installer une borne munie de sa plaquette de protection dans un tel logement.

La présente invention vise un dispositif permettant l'installation facile d'une plaquette de protection de borne, notamment dans un boîtier du type comprenant un socle et un capot ou couvercle.

A cet effet, l'invention propose un appareil électrique modulaire, renfermé dans un boîtier isolant constitué d'un socle ouvert vers le haut qu'un capot est adapté à recouvrir, comportant des bornes de raccordement, chacune desquelles, disposée dans un logement ménagé sur ledit socle en regard d'une ouverture à travers laquelle peut être introduit un câble électrique, comprenant un élément conducteur fixe et un élément mobile suivant la hauteur du boîtier, des parties actives desdits éléments fixe et mobile formant les mors, respectivement fixe et mobile, d'une mâchoire adaptée à enserrer, sous la commande d'une vis de serrage, l'âme dudit câble électrique, une plaquette isolante disposée parallèlement à ladite ouverture étant associée à l'élément mobile de ladite borne pour que, lorsque ladite mâchoire enserre le câble, ladite plaquette s'étende en regard de la partie de l'ouverture laissée libre par le câble, et que, lorsque ladite mâchoire est ouverte, ladite plaquette laisse libre ladite ouverture, ledit appareil étant caractérisé en ce que ledit boîtier comporte un passage, partant de la base dudit socle et débouchant sur le logement de la borne, par lequel peut être introduite ladite plaquette isolante, cette dernière étant pourvue de moyens d'accrochage élastiques adaptés à se fixer dans des logements correspondants sur ledit élément mobile, lorsque ce dernier est dans sa position basse d'ouverture de ladite mâchoire.

Cette disposition permet d'introduire de manière très simple la plaquette isolante dans le boîtier. Mieux, elle permet même d'introduire cette plaquette isolante alors que l'ensemble des éléments de l'appareil sont installés dans le socle et que ce dernier est recouvert par le capot.

Les bornes étant généralement installées dans le boîtier mâchoires fermées, il suffit pour solidariser l'élément mobile et la plaquette, une fois cette dernière introduite dans le boîtier, d'actionner la vis de serrage pour ouvrir la mâchoire de la borne. L'élément mobile va alors descendre jusqu'à la position dans laquelle les moyens d'accrochage élastiques de la plaquette vont venir s'introduire dans les logements correspondants dudit élément mobile. La plaquette se trouve alors solidarisée à l'élément mobile et se déplace avec lui.

Les caractéristiques et avantages de l'invention ressortiront d'ailleurs de la description qui va suivre, en référence aux dessins annexés parmi lesquels :
la figure 1 est une vue en perspective d'une partie d'un appareil électrique suivant la présente invention, montrant notamment une borne de raccordement de cet appareil ;
la figure 2 est une vue en coupe suivant la direction II-II de la partie de l'appareil électrique représentée à la figure 1 ;
la figure 3 est une vue de l'appareil électrique similaire à celle de la figure 1, dans une autre position de fonctionnement de la borne de raccordement.

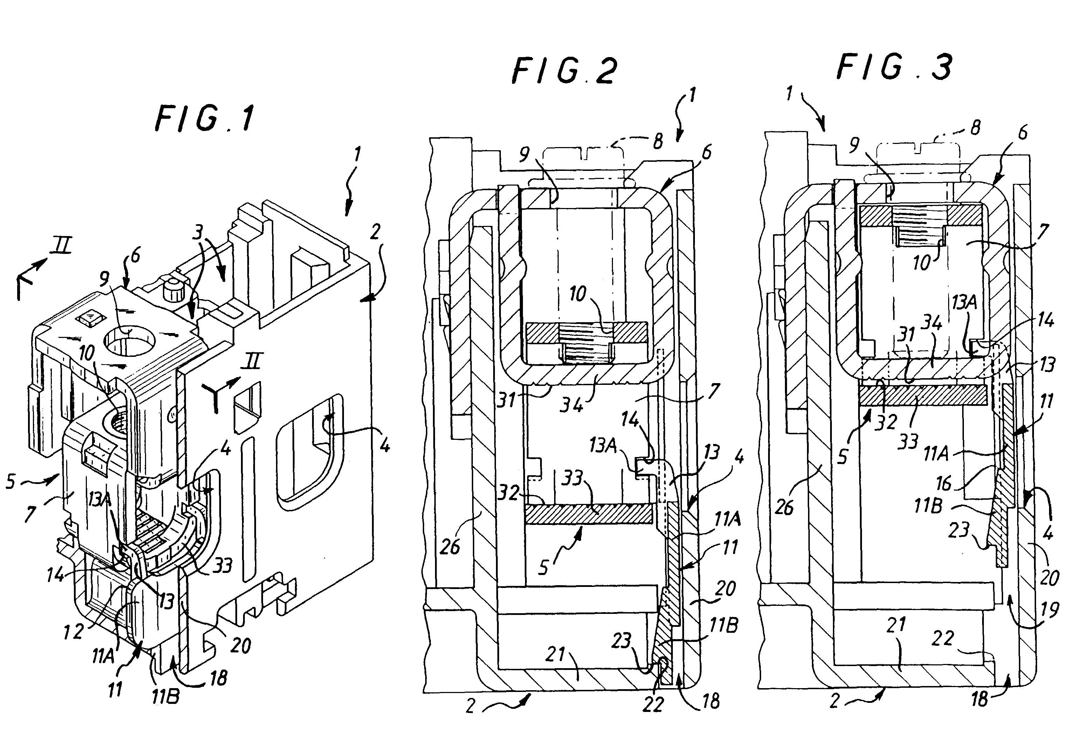

Un appareil électrique modulaire 1, partiellement représenté sur la figure 1, est renfermé dans un boîtier isolant constitué d'un socle 2 ouvert vers le haut qu'un capot est adapté à recouvrir. Il s'agit, ici, d'un interrupteur différentiel. Dans ce cas, comme il est bien connu, le boîtier a une forme globalement parallélépipédique et contient, au niveau de ses petites faces latérales, des logements pour bornes de raccordement. Ici, chacun de ces logements du boîtier est constitué par un logement ouvert vers le haut, ménagé dans le socle 2, adapté à recevoir toute entière la borne correspondante, le capot (non représenté) étant adapté à fermer ledit logement.

La figure 1 montre une des extrémités latérales du socle 2 du boîtier de l'appareil 1, au niveau de laquelle se trouvent deux logements 3, ouverts vers le haut, pour bornes de raccordement. L'un de ces logements est représenté en entier, sans borne à l'intérieur. L'autre, représenté avec des arrachements locaux, contient une borne 5.

Comme on le voit sur la figure 1, la borne 5 comprend un élément conducteur fixe 6 et un élément 7 mobile suivant la hauteur du boîtier.

L'élément fixe 6 est constitué par une plaque, avantageusement en cuivre, plusieurs fois pliée de manière à s'étendre, comme on le voit sur la figure 2, d'abord verticalement vers le haut, selon une première branche, puis horizontalement, selon une seconde branche, traversée par un alésage 9, puis, après un coude vers le bas, selon une troisième branche, verticale, puis, après un coude vers ladite première branche, selon une quatrième branche 34, horizontale et enfin, après un coude vers le haut, selon une cinquième branche, verticale, rejoignant ladite seconde branche. L'extrémité de cette cinquième branche est pourvue, comme on le voit sur les figures 1 et 2, d'une saillie adaptée à s'emboîter dans un logement prévu dans la seconde branche.

L'élément mobile 7, comme on le voit sur la figure 1, est constitué par un étrier de forme sensiblement rectangulaire avec un côté inférieur 33 arrondi vers l'extérieur. Le côté supérieur de cet élément mobile 7 est traversé par un alésage fileté prolongé à l'intérieur de l'étrier par deux plaques filetées disposées en regard l'une de l'autre, le tout formant un filetage 10.

Comme on le voit bien sur la figure 1, l'élément mobile 7 est traversé par la quatrième branche 34 de l'élément fixe 6. Une vis de serrage 8, représentée en traits mixtes sur les figures 2 et 3, traverse l'élément fixe 6 suivant sa hauteur en passant à travers l'alésage 9 de sa seconde branche, l'extrémité de ladite vis étant en appui sur la quatrième branche 34. Cette vis 8 est en prise avec le filetage 10 de l'élément mobile 7.

De la sorte, lesdits éléments fixe 6 et mobile 7 sont liés, la vis 8 permettant de les translater verticalement l'un par rapport à l'autre entre deux positions extrêmes représentées respectivement aux figures 2 et 3.

Ainsi montés, les éléments fixe et mobile de la borne 5 présentent des parties actives, à savoir la face inférieure 31 de la quatrième branche 34 de l'élément fixe et la face supérieure 32 du côté inférieur 33 de l'élément mobile, qui forment des mors, respectivement fixe et mobile, d'une mâchoire adaptée à enserrer, sous la commande de la vis de serrage 8, l'âme d'un câble électrique (non représenté) devant être raccordé à ladite borne.

La borne 5 est introduite debout dans le logement 3, comme on peut le voir sur les figures 1 à 3. La forme intérieure de ce logement est adaptée à maintenir l'élément fixe 6 en lui interdisant tous mouvements latéraux et en le retenant, par un épaulement, dans une partie supérieure du socle 2, comme on peut le voir aux figures 1 à 3. L'installation du capot sur le socle 2 achève d'immobiliser cet élément fixe en venant porter sur sa seconde branche.

Comme on le voit sur les figures 2 et 3, la seconde branche de l'élément fixe 6 passe au dessus d'une cloison 26 séparant le logement 3 du reste du socle 2, la première branche de cet élément fixe s'étendant contre ladite cloison, en dehors dudit logement. Cette première branche de l'élément fixe 6 assure la connexion électrique de la borne 5 avec les éléments (non représentés) de l'appareil 1 renfermés dans le socle 2.

La tête de la vis 8 comprend, comme on le voit sur les figures 2 et 3, un épaulement en dessus duquel peuvent s'étendre des moyens de butée (non représentés) venant du capot, pour immobiliser verticalement ladite vis, de sorte que cette dernière, lorsque le boîtier est fermé, ne dispose plus que d'un degré de liberté en rotation par rapport au boîtier. Un passage est prévu dans le capot de ce dernier pour avoir accès de l'extérieur à cette tête de la vis 8, pour pouvoir commander cette dernière lorsque ledit boîtier est fermé.

En dessous de l'épaulement adapté à retenir verticalement l'élément fixe 6, le logement 3 est de forme adaptée à l'élément mobile 7, de sorte que ce dernier peut coulisser verticalement dans le socle 2. La figure 2 montre cet élément mobile dans sa position la plus basse, correspondant à la position d'ouverture maximum de la mâchoire de la borne 5, et la figure 3 le montre dans sa position la plus haute, correspondant à la position serrée maximum de cette mâchoire.

Comme on le voit sur les figures 1 à 3, une ouverture 4 est ménagée sur une paroi extérieure 20 du compartiment 3, en regard de la borne 5, et, plus précisément, en regard de l'élément mobile 7 quand ce dernier est dans sa position la plus basse représentée sur la figure 2. A travers cette ouverture 4 peut être introduite l'extrémité d'un câble électrique (non représenté) à raccorder avec la borne 5.

Le mors fixe 31 de la borne 5 s'étend à la même hauteur que la limite supérieure de l'ouverture 4, comme on le voit bien sur la figure 2. Quand la mâchoire de la borne 5 est ouverte, c'est à dire quand l'élément mobile 7 est dans sa position la plus basse représentée à la figure 2, le mors mobile 32 se trouve sensiblement à la même hauteur que la limite inférieure de l'ouverture 4.

Une plaquette isolante 11 est adaptée à être installée dans le compartiment 3 suspendue à l'élément mobile 7 parallèlement à la paroi 20 sur laquelle est ménagée l'ouverture 4. Cette plaquette isolante 11 est avantageusement monobloc et réalisée dans un matériau relativement élastique.

Elle comporte, comme on le voit bien sur la figure 1, une partie principale 11A en forme de plaque rectangulaire arrondie aux angles.

Elle comporte également, comme on le voit sur les figures 1 à 3, deux bras latéraux 13 partant de la partie supérieure de la partie principale 11A et s'étendant vers le haut globalement verticalement. Ces bras 13 sont coudés de sorte que leurs extrémités 13A s'étendent à l'horizontale, comme on le voit sur les figures 2 et 3.

Ces bras 13 forment moyens d'accrochage, leurs extrémités coudées 13A étant adaptées à se fixer dans des logements correspondants 14 ménagés sur l'élément mobile 7, afin de suspendre la plaquette isolante 11 audit élément mobile, comme on le voit sur les figures 1 à 3. Les logements 14 sont des encoches ménagées aux deux extrémités du côté inférieur arrondi 33 de l'élément mobile 7.

Comme on le voit sur la figure 1, les bras 13 n'interviennent pas tout à fait aux extrémités latérales de la partie principale 11A de la plaquette 11, les portions 12 de cette partie 11A qui s'étendent à l'extérieur de la zone se trouvant entre lesdits bras formant deux ailes latérales de la plaquette 11.

La plaquette isolante 11 comporte finalement une languette inférieure 11B décalée par rapport à ladite partie principale, comme on le voit sur les figures 2 et 3. Cette languette 11B, de largeur inférieure à celle de la partie 11A, est centrée latéralement par rapport à cette dernière. Sa section est sensiblement triangulaire, et va en s'accroissant vers le bas, comme on le voit sur les figures 2 et 3. A son extrémité inférieure est ménagé un épaulement 23, comme on le voit sur les figures 2 et 3.

Deux rainures 19 s'étendant verticalement à proximité de la paroi 20 sont ménagées l'une en regard de l'autre dans le logement 3, respectivement sur une paroi latérale extérieure de ce logement et sur la cloison latérale séparant les deux logements représentés sur la figure 1. On peut voir la rainure 19 ménagée sur cette dernière notamment sur la figure 3.

Ces rainures 19 sont adaptées à recevoir les ailes latérales 12 de la plaquette isolante 11, de manière à ce que cette dernière soit en liaison glissière dans le logement 3, coulissant verticalement contre la paroi 20.

Comme on le voit sur les figures 2 et 3, est ménagé dans la base du socle 2 un passage 18 reliant le logement 3 à l'extérieur, par lequel la plaquette isolante 11 peut être introduite dans ledit logement.

La plaquette 11 est introduite verticalement dans le passage 18, ce dernier étant de taille suffisante pour laisser passer la partie supérieure de cette plaquette, des élargissements locaux permettant le passage des bras 13.

Les ailes latérales 12 s'engageant dans les rainures 19 correspondantes, la plaquette coulisse verticalement le long de la paroi 20 jusqu'à ce que la languette 11B de la plaquette, du fait de son décalage par rapport à la partie principale 11A et de sa section croissante, vienne buter contre la paroi inférieure 21 du logement 3 dans laquelle est ménagé le passage 18.

Si un effort vertical suffisant est exercé sur la plaquette 11, cette languette 11B va se déformer élastiquement par flexion vers la paroi 20, la face inclinée de ladite languette formant rampe. Ceci permet le passage de l'intégralité de la plaquette 11 à travers le passage 18.

Une fois la plaquette entièrement introduite dans le logement 3, la languette 11B va revenir dans sa position initiale représentée à la figure 2. L'épaulement 23 de la languette 11B se trouve alors en butée sur une portion 22 de la surface supérieure de la paroi 21, retenant ainsi la plaquette 11 qui ne peut plus ressortir du logement 3.

La languette 11B forme donc moyen de butée déformable élastiquement qui, en coopérant avec un moyen de butée fixe du logement 3, est adaptée à rendre irréversible l'introduction de la plaquette 11 dans ce logement 3.

Généralement, la borne 5 est introduite dans le logement 3 mâchoire serrée au maximum, telle que représentée sur la figure 3. Une fois la plaquette introduite en entier dans le logement 3, il suffit, au moyen de la vis 8, de faire descendre l'élément mobile 7 jusqu'à sa position basse d'ouverture maximum de la mâchoire, représentée sur la figure 2.

Le côté inférieur arrondi 33 de cet élément mobile 7 va alors entrer en contact avec les bras 13, la face inférieure de ce côté 33 jouant le rôle d'une rampe qui va forcer ces bras 13 à se déformer élastiquement par flexion latérale. Les deux bras vont donc s'écarter l'un de l'autre jusqu'à ce que leurs extrémités coudées 13A se trouvent au niveau des logements 14 de l'élément mobile 7. A ce moment, les bras 13 vont revenir à la verticale, leurs extrémités coudées 13A rentrant dans les logements 14, comme représenté sur la figure 2.

Les bras 13 forment donc moyens d'accrochage élastiques adaptés à assurer la fixation de la plaquette 11 sur l'élément mobile 7.

Comme on le voit sur les figures 2 et 3, l'extrémité supérieure de la partie principale 11A de la plaquette 11 se trouve à la hauteur du mors inférieur 32 de la borne 5.

Ainsi, lorsque la mâchoire de la borne 5 est dans sa position ouverte maximum représentée à la figure 2, dans laquelle, comme on l'a indiqué plus haut, le mors inférieur 32 se trouve sensiblement au niveau de la limite inférieure de l'ouverture 4, cette dernière est laissée libre par ladite plaquette 11. Un câble électrique peut donc être introduit entre les mors 31 et 32 de la mâchoire.

Lorsque, sous la commande de la vis 8, l'élément mobile 7 est remonté de telle sorte que ladite mâchoire enserre le câble, l'extrémité supérieure de ladite plaquette va se trouver, comme le mors 32, juste en dessous dudit câble.

La limite supérieure de l'ouverture 4 s'étendant à la hauteur du mors fixe 31, le câble se trouve en butée contre elle et va donc occuper une partie supérieure de ladite ouverture, la plaquette 11 s'étendant en regard de toute la partie inférieure de cette ouverture laissée libre par ledit câble.

Ainsi, la plaquette 11 isole la borne 5 de l'extérieur lorsque cette dernière est raccordée à un câble.

## Revendications

1. Appareil électrique modulaire (1), renfermé dans un boîtier isolant constitué d'un socle (2) ouvert vers le haut qu'un capot est adapté à recouvrir, comportant des bornes de raccordement (5), chacune desquelles, disposée dans un logement (3) ménagé sur ledit socle (2) en regard d'une ouverture (4) à travers laquelle peut être introduit un câble électrique, comprenant un élément conducteur fixe (6) et un élément mobile (7) suivant la hauteur du boîtier, des parties actives desdits éléments fixe et mobile formant les mors (31, 32), respectivement fixe et mobile, d'une mâchoire adaptée à enserrer, sous la commande d'une vis de serrage (8), l'âme dudit câble électrique, une plaquette isolante (11) disposée parallèlement à ladite ouverture étant associée à l'élément mobile (7) de ladite borne (5) pour que, lorsque ladite mâchoire enserre le câble, ladite plaquette (11) s'étende en regard de la partie de l'ouverture (4) laissée libre par le câble, et que, lorsque ladite mâchoire est ouverte ladite plaquette (11) laisse libre ladite ouverture (4), ledit appareil (1) étant caractérisé en ce que ledit boîtier comporte un passage (18), partant de la base dudit socle (2) et débouchant sur le logement (3) de la borne (5), par lequel peut être introduite ladite plaquette isolante (11), cette dernière étant pourvue de moyens d'accrochage élastiques (13) adaptés à se fixer dans des logements correspondants (14) sur ledit élément mobile (7), lorsque ce dernier est dans sa position basse d'ouverture de ladite mâchoire.

2. Appareil électrique selon la revendication 1, caractérisé en ce que le mors fixe (31) de la borne (5) se trouve à la hauteur de la limite supérieure de l'ouverture (4) d'introduction du câble, le mors mobile (32) de ladite borne se trouvant en dessous de ce mors fixe , et en ce que ladite plaquette isolante (11) est suspendue à l'élément mobile (7) de la borne, son extrémité supérieure se trouvant à la hauteur dudit mors mobile.

3. Appareil électrique selon la revendication 2, caractérisé en ce que ladite plaquette isolante (11) est pourvue de bras (13) coudés à leurs extrémités, formant lesdits moyens d'accrochage élastique, les logements correspondants (14) sur ledit élément mobile (7) étant adaptés à recevoir les extrémités coudées (13A) desdits bras, de sorte que ladite plaquette est suspendue audit élément mobile par lesdits bras.

4. Appareil électrique selon la revendication 3, caractérisé en ce que ledit élément mobile (7) de la borne (5) est constitué par un étrier, traversé par la partie active formant mors (31) de l'élément fixe (6) de cette borne, ledit étrier étant de forme sensiblement rectangulaire avec un arrondissement au niveau de son côté inférieur (33), ce dernier formant rampe qui, lorsque ledit élément mobile descend vers la plaquette isolante (11), oblige les bras (13) de cette dernière à se déformer élastiquement jusqu'à ce qu'ils se trouvent au niveau des logements (14) adaptés à recevoir leurs extrémités coudées (13A).

5. Appareil électrique selon l'une quelconque des revendications précédente, caractérisé en ce que ladite plaquette isolante (11) est pourvue à son extrémité inférieure d'un moyen de butée (11B) déformable élastiquement adapté à coopérer avec un moyen de butée fixe (22) formé à l'intérieur dudit logement (3), de manière à empêcher que ladite plaquette ne ressorte dudit logement une fois qu'elle y a été toute entière introduite.

6. Appareil électrique selon l'une quelconque des revendications précédente, caractérisé en ce que des rainures (19) adaptées à recevoir deux ailes latérales (12) de ladite plaquette isolante (11) sont ménagées de part et d'autre du logement (3) de sorte que ladite plaquette peut coulisser verticalement dans ledit logement.

## Claims

1. A modular electrical apparatus (1) enclosed in an insulating casing formed by an upwardly open base (2) that a cap is adapted to cover, comprising connecting terminals (5), each of which, disposed in a housing (3) provided on said base (2) facing an opening (4) through which an electric cable can be introduced, comprising a fixed conductor element (6) and an element (7) which is movable in the direction of the height of the casing, active parts of said fixed and movable elements forming the respectively fixed and movable jaws (31, 32) of a clamping means which under the control of a clamping screw (8) is adapted to clamp the core of said electric cable, an insulating plate (11) disposed parallel to said opening being associated with the movable element (7) of said terminal (5) so that when said clamping means clamps the cable said plate (11) extends in facing relationship with the part of the opening (4) which is left free by the cable and that when said clamping means is open said plate (11) leaves said opening (4) free, said apparatus (1) being characterised in that said casing comprises a passage (18) starting from the bottom of said base (2) and opening to the housing (3) of the terminal (5), by way of which said insulating plate (11) can be introduced, the latter being provided with resilient catch means (13) adapted to be fixed in corresponding housings (14) on said movable element (7) when the latter is in its downward position of opening said clamping means.

2. An electrical apparatus according to claim 1 characterised in that the fixed jaw (31) of the terminal (5) is disposed at the height of the upper limit of the opening (4) for introduction of the cable, the movable jaw (32) of said terminal being below said fixed jaw, and that said insulating plate (11) is suspended from the movable element (7) of the terminal, its upper end being at the height of said movable jaw.

3. An electrical apparatus according to claim 2 characterised in that said insulating plate (11) is provided with arms (13) which are bent at their ends, forming said resilient catch means, the corresponding housings (14) on said movable element (7) being adapted to receive the bent ends (13A) of said arms, so that said plate is suspended from said movable element by said arms.

4. An electrical apparatus according to claim 3 characterised in that said movable element (7) of the terminal (5) is formed by a stirrup through which passes the active part forming the jaw (31) of the fixed element (6) of said terminal, said stirrup being of substantially rectangular shape with a rounded configuration at the level of its lower side (33), the latter forming a ramp which, when said movable element moves downwardly towards the insulating plate (11), obliges the arms (13) of the latter to be resiliently deformed until they are at the level of the housings (14) adapted to receive their bent ends (13A).

5. An electrical apparatus according to any one of the preceding claims characterised in that said insulating plate (11) is provided at its lower end with a resiliently deformable abutment means (llB) adapted to cooperate with a fixed abutment means (22) formed in the interior of said housing (3), so as to prevent said plate from coming out of said housing once it has been entirely introduced therein.

6. An electrical apparatus according to any one of the preceding claims characterised in that grooves (19) adapted to receive two lateral limb portions (12) of said insulating plate (11) are provided on respective sides of the housing (3) so that said plate can slide vertically in said housing.

## Patentansprüche

1. Modulares elektrisches Gerät (1), das in einem Isoliergehäuse eingeschlossen ist, das aus einem nach oben offenen Sockel (2) besteht, den eine Kappe bedecken kann, und das Anschlußklemmen (5) aufweist, deren jede in einer Aufnahme (3) angeordnet ist, die an diesem Sockel (2) gegenüber einer Öffnung (4) vorgesehen ist, durch welche ein elektrisches Kabel eingeführt werden kann, und ein feststehendes leitendes Element (6) und ein in der Höhe des Gehäuses bewegliches Element (7) aufweist, wobei aktive Teile des feststehenden und des beweglichen Elements die feststehende bzw. die bewegliche Backe (31, 32) einer Klemme bilden, die dazu ausgelegt ist, unter der Betätigung durch eine Klemmschraube (8) den Kern des elektrischen Kabels einzuklemmen, und eine zu dieser Öffnung parallel angeordnete Isolierplatte (11) dem beweglichen Element (7) der Anschlußklemme (5) zugeordnet ist, damit diese Platte (11), wenn die Klemme das Kabel einklemmt, sich gegenüber dem vom Kabel freigelassenen Teil der Öffnung (4) erstreckt und, wenn die Klemme offen ist, diese Öffnung (4) freiläßt, wobei dieses Gerät (1) dadurch gekennzeichnet ist, daß das Gehäuse einen von der Basis des Sockels (2) ausgehenden und in die Aufnahme (3) der Anschlußklemme (5) mündenden Durchgang (18) besitzt, durch den die Isolierplatte (11) eingeführt werden kann, wobei diese mit elastischen Einhakmitteln (13) versehen ist, die dazu ausgelegt sind, sich in entspre-chenden Aufnahmen (14) an dem beweglichen Element (7) zu befestigen, wenn dieses in seiner unteren Stellung der Öffnung der Klemme ist.

2. Elektrisches Gerät nach Anspruch 1, dadurch gekennzeichnet, daß die feststehende Backe (31) der Anschlußklemme (5) sich in der Höhe der oberen Grenze der Öffnung (4) zur Einführung des Kabels befindet, wobei sich die bewegliche Backe (32) der Anschlußklemme unterhalb der feststehenden Backe befindet, und daß die Isolierplatte (11) an dem beweglichen Element (7) der Anschlußklemme eingehängt ist, wobei ihr oberes Ende sich in der Höhe der beweglichen Backe befindet.

3. Elektrisches Gerät nach Anspruch 2, dadurch gekennzeichnet, daß die Isolierplatte (11) mit an ihren Enden umgebogenen Armen (13) versehen ist, die die elastischen Einhakmittel bilden, wobei die entsprechenden Aufnahmen (14) auf dem beweglichen Element (7) dazu ausgelegt sind, die umgebogenen Enden (13A) der Arme aufzunehmen, so daß die Platte durch diese Arme an dem beweglichen Element eingehängt ist.

4. Elektrisches Gerät nach Anspruch 3, dadurch gekennzeichnet, daß das bewegliche Element (7) der Anschlußklemme (5) aus einem Bügel besteht, der von dem die Backe (31) bildenden aktiven Teil des feststehenden Elements (6) dieser Anschlußklemme durchsetzt ist und von im wesentlichen rechteckiger Form mit einer Abrundung auf Höhe seiner Unterseite (33) ist, wobei diese eine Schräge bildet, die, wenn das bewegliche Element sich auf die Isolierplatte (11) zu nach unten bewegt, die Arme (13) dieser Isolierplatte dazu zwingt, sich elastisch zu verformen, bis sie sich auf Höhe der Aufnahmen (14) befinden, die dazu ausgelegt sind, ihre umgebogenen Enden (13A) aufzunehmen.

5. Elektrisches Gerät nach einem der vorhergehenden Ansprüche, dadurch gekennzeichnet, daß die Isolierplatte (11) an ihrem unteren Ende mit einem elastisch verformbaren Anschlagsmittel (11B) versehen ist, das dazu ausgelegt ist, mit einem im Inneren der Aufnahme (3) gebildeten feststehenden Anschlagsmittel (22) zusammenzuwirken, so daß verhindert wird, daß die Platte diese Aufnahme verläßt, nachdem sie in diese vollständig eingeführt worden ist.

6. Elektrisches Gerät nach einem der vorhergehenden Ansprüche, dadurch gekennzeichnet, daß zu beiden Seiten der Aufnahme (3) Nuten (19) vorgesehen sind, die dazu ausgelegt sind, zwei seitliche Flügel (12) der Isolierplatte (11) aufzunehmen, so daß die Platte vertikal in der Aufnahme gleiten kann.
